# FASCICULE DE BREVET EUROPEEN

(11) **EP 0 534 833 B1**
(45) Date de publication et mention de la délivrance du brevet: **27.09.1995**
(21) Numéro de dépôt: 92402584.4
(22) Date de dépôt: 21.09.1992
(51) Int. Cl.: E05C 3/24, B64C 25/26

(54) **Dispositif de verrouillage de sécurité à crochet basculant**
Verriegelungsvorrichtung mit Hakenriegel
Locking device with a rotating hook bolt

(30) Priorité: 25.09.1991 FR 9111812; 13.11.1991 FR 9113921
(43) Date de publication de la demande: 31.03.1993
(73) Titulaire: MESSIER BUGATTI, F-78140 Velizy Villacoublay (FR)
(72) Inventeur: Rouzaud, Dominique, F-91470 Angervilliers (FR)
(74) Mandataire: Fruchard, Guy

(56) Documents cités:
- FR-A- 1 039 871
- US-A- 2 859 995
- US-A- 3 784 241

## Description

La présente invention concerne un dispositif de verrouillage de sécurité à crochet basculant.

Plus particulièrement, l'invention concerne un dispositif de verrouillage comportant un boîtier, un premier crochet monté sur un axe de basculement porté par le boîtier pour basculer entre une position d'ouverture et une position de fermeture dans laquelle le premier crochet supporte un organe d'accrochage, ledit premier crochet étant monté en porte-à-faux par rapport à son axe de basculement, c'est-à-dire qu'en position de fermeture l'organe d'accrochage prend appui sur le premier crochet en tendant à le faire basculer vers sa position d'ouverture, un organe de verrouillage escamotable disposé pour s'opposer à un mouvement de basculement du premier crochet par un appui d'une partie de verrouillage du premier crochet sur l'organe de verrouillage, ainsi qu'un second crochet associé au premier crochet et un organe de liaison entre le premier crochet et le second crochet, conformément au préambule de la revendication 1.

Le document US-A-3,784,241 décrit un tel dispositif de verrouillage. Dans ce document, les deux crochets ont des bords d'arrachage tournés l'un vers l'autre pour former une pince enserrant l'organe d'arrachage en position de fermeture. Ce type de dispositif de verrouillage est utilisé en particulier pour verrouiller une porte ou un volet en position fermée. Dans certains cas, notamment lorsque le dispositif sert à verrouiller des volets d'inversion de poussée des réacteurs d'un avion, il est nécessaire que le verrouillage soit assuré de façon particulièrement sûre car une défaillance du dispositif de verrouillage aurait des conséquences extrêmement graves. En particulier, dans le cas des volets d'inversion de poussée des réacteurs d'un avion, une ouverture intempestive de ces volets en vol ou dans une phase d'atterrissage avant le roulage au sol provoque une telle impulsion de freinage sur l'avion que le contrôle de celui-ci est irrémédiablement perdu.

Selon l'invention, on propose de modifier l'agencement d'un dispositif de verrouillage du type précité, de façon à obtenir une sécurité optimale contre une ouverture intempestive en cas de défaillance du premier crochet.

Ce problème est résolu conformément à l'invention, en prévoyant que le second crochet est adjacent au premier crochet, et que l'organe de liaison est agencé de telle façon qu'en position de fermeture du premier crochet, le second crochet soit maintenu dans une position proche d'une position dans laquelle le second crochet supporte l'organe d'accrochage, ledit second crochet étant cependant hors charge tant que le premier crochet est en service, et en cas de défaillance du premier crochet, le second crochet est immédiatement mis en service et prend le relais du premier crochet pour supporter l'organe d'accrochage, conformément à la partie caractérisante de la revendication 1.

De préférence, le dispositif de verrouillage comporte un détecteur de position de l'organe d'accrochage et un détecteur de position du second crochet reliés à un organe de commande de l'organe de verrouillage. Ainsi, lorsque l'on détecte un mouvement de l'organe d'accrochage, lequel résulte d'une défaillance du premier crochet, ou une défaillance du second crochet, on inhibe immédiatement la commande d'ouverture de l'organe de verrouillage.

Selon un mode de réalisation de l'invention, l'organe de liaison est un organe élastique disposé entre le premier et le second crochets pour solliciter le second crochet vers un contact avec l'organe d'accrochage lorsque le premier crochet supporte l'organe d'accrochage, et le second crochet comporte une partie de verrouillage qui est en retrait de la partie de verrouillage du premier crochet par rapport à l'organe de verrouillage lorsque le premier crochet supporte l'organe d'accrochage.

Selon une version avantageuse de ce mode de réalisation, la partie de verrouillage du second crochet a une forme assurant un blocage mécanique de l'organe de verrouillage lorsqu'elle est en contact avec celui-ci.

Selon une variante de ce mode de réalisation de l'invention, l'organe de liaison est un bloc support commun dont le premier crochet et le second crochet sont solidaires, le second crochet comportant un bord d'accrochage en retrait par rapport à un bord d'accrochage du premier crochet et une partie d'appui en retrait par rapport à une partie d'appui du premier crochet sur l'organe de verrouillage. De préférence, le premier crochet et le second crochet sont réalisés en une seule pièce avec le bloc support commun.

Selon un autre mode de réalisation de l'invention, le second crochet est monté sur un axe de basculement disposé selon une direction de réaction du second crochet lorsque celui-ci support l'organe d'accrochage, le second crochet est rappelé élastiquement vers une position de contact avec l'organe d'accrochage lorsque le premier crochet est en position de fermeture, et l'organe de liaison entre le premier et le second crochet comprend une butée portée par le premier crochet pour maintenir le second crochet légèrement à l'écart de l'organe d'accrochage lorsque le premier crochet est en service. Ainsi, en cas de défaillance du premier crochet par rupture de celui-ci ou par rupture de l'axe de basculement le supportant, l'organe d'accrochage vient immédiatement en appui sur le second crochet qui le supporte de façon stable.

D'autres caractéristiques et avantages de l'invention apparaîtront à la lecture de la description qui suit de deux modes de réalisation particuliers non limitatifs de l'invention en liaison avec les figures ci-jointes parmi lesquelles :
- la figure 1 est une vue en élévation, partiellement en coupe, d'un premier mode de réalisation du dispositif de verrouillage selon l'invention,
- la figure 2 est une vue en coupe selon la ligne II-II de la figure 1,
- la figure 3 est une illustration schématique d'un second mode de réalisation de l'invention,
- la figure 4 est une vue de côté des crochets de verrouillage selon une variante du dispositif de la figure 1,
- la figure 5 est une vue de côté selon une direction opposée à la figure 4,
- la figure 6 est une vue en coupe selon la ligne VI-VI de la figure 4.

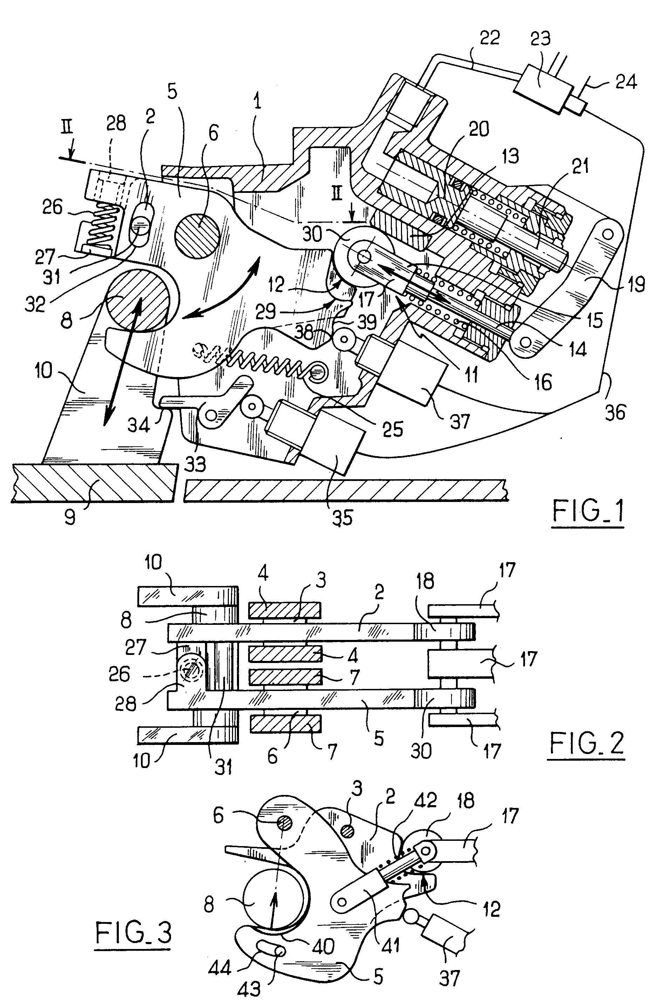

En référence aux figures 1 et 2, dans le premier mode de réalisation, le dispositif de verrouillage selon l'invention comporte un boîtier 1, un premier crochet 2 monté sur un axe de basculement 3 porté par des entretoises 4 solidaires du boîtier, et un second crochet 5 monté adjacent au premier crochet 2 pour basculer autour d'un axe de basculement 6 porté par des entretoises 7 également solidaires du boîtier.

Dans ce premier mode de réalisation, le premier crochet 2 et le second crochet 5 ont des formes presque identiques et leur contour se superpose donc en grande partie sur la figure 1 d'autant plus que leurs axes de basculement sont coaxiaux.

Le premier crochet 2 et le second crochet 5 sont montés en porte à faux par rapport à leur axe de basculement respectif, c'est-à-dire qu'en position de fermeture, un organe d'accrochage 8 prenant appui sur les crochets tend à faire basculer ceux-ci vers une position d'ouverture dans laquelle l'organe d'accrochage 8 s'échappe des crochets. L'organe d'accrochage 8 est par exemple une tige d'accrochage fixée à un volet d'inversion de poussée 9 par des goussets 10. Pour maintenir le premier crochet 2 en position de fermeture comme illustré sur la figure 1, le dispositif de verrouillage comporte un organe de verrouillage généralement désigné en 11 inséré entre une partie de verrouillage 12 du crochet 2 et une butée 13 portée par le boîtier.

Dans le mode de réalisation particulier illustré, l'organe de verrouillage 11 comprend une tige de commande 14 montée pour coulisser dans un alésage du boîtier 1 et comportant un épaulement 15 sur lequel prend appui un ressort 16 qui tend à ramener l'organe de verrouillage vers une position d'insertion entre la partie de verrouillage 12 du crochet 2 et la butée 13. A son extrémité tournée vers le crochet 2, l'organe de verrouillage 11 comporte une chape 17 supportant un galet de verrouillage 18. La tige de commande 14 est reliée à un levier 19 fixé de façon articulée au boîtier 1 et le boîtier 1 supporte un vérin hydraulique 20 dont la tige 21 s'étend au regard du levier 19. Le vérin de commande 20 est relié par un conduit 22 à une électrovanne de commande 23 reliée à une centrale de gestion électronique (non représentée) par une ligne électrique 24. Le premier crochet 2 est normalement rappelé vers une position d'ouverture par un ressort 25 ayant une extrémité fixée au crochet 2 et une extrémité fixée au boîtier 1.

Le premier crochet 2 et le second crochet 5 sont associés par un organe de liaison comprenant un ressort hélicoïdal 26 prenant appui sur une languette 27 solidaire du premier crochet 2 et une languette 28 solidaire du second crochet 5 pour faire pivoter le crochet 2 et le crochet 5 dans des sens opposés de façon qu'en position de fermeture une partie de verrouillage 29 du second crochet 5 soit normalement en retrait de la partie de verrouillage 12 du premier crochet 2 par rapport à l'organe de verrouillage 11, lequel comporte en outre un galet 30 porté par la chape 17 en regard de la partie de verrouillage 29 du second crochet 5. Contrairement à la partie de verrouillage 12 du premier crochet 2 qui est de préférence rectiligne pour permettre un dégagement du galet 18 de l'organe de verrouillage 11, la partie de verrouillage 29 a une forme curviligne concave épousant la forme du galet 30 afin de provoquer un blocage mécanique de l'organe de verrouillage 11 lorsque la partie de verrouillage 29 est en contact avec celui-ci. Le mouvement d'écartement du crochet 5 par rapport au crochet 2 résultant de l'action du ressort 26 est limité par la coopération d'un doigt 31 porté par le premier crochet 2 avec une fente 32 réalisée dans le second crochet 5.

Un levier 33 est monté sur le boîtier 1 pour pivoter et a une de ses extrémités en contact avec un épaulement 34 d'un gousset 10 supportant l'organe d'accrochage 8, et une extrémité opposée en contact avec un détecteur de position 35 relié à l'électrovanne de commande 23 par une ligne 36. Un détecteur de position 37 du second crochet 5 est également fixé au boîtier 1 et s'étend en regard d'un bord du crochet 5 comportant un profil convexe 38 adjacent à un profil concave 39.

Le fonctionnement du dispositif selon ce mode de réalisation de l'invention est le suivant : lors d'un fonctionnement normal, et pour une position fermée du volet d'inversion du volet de poussée 9, le dispositif se présente dans l'état représenté sur la figure 1 c'est-à-dire que la partie de verrouillage 12 du premier crochet 2 prend appui sur le galet 18 de l'organe de verrouillage 11 et le crochet 2 supporte donc l'organe d'accrochage 8 pour maintenir le volet 9 en position fermée. Le second crochet 5 est repoussé par le ressort 26 dans un sens inverse aux aiguilles d'une montre. Ce mouvement est limité par le contact du crochet 5 avec l'organe d'accrochage 8 et dans cette position la partie de verrouillage 29 du crochet 5 est légèrement écartée du galet de verrouillage 30 de l'organe de verrouillage 11. Le doigt de butée 31 est disposé sensiblement au milieu de la fente 32. Le second crochet 5 est donc en contact avec l'organe d'accrochage 8 mais ne supporte pas celui-ci. Le levier 33 de détection de la position de l'organe d'accrochage 8 prend appui sur la tige du détecteur 35 pour signaler que le volet 9 est convenablement fermé. La partie convexe 38 du bord du second crochet 5 est en regard du détecteur de position 37 et celui-ci transmet donc un signal de positionnement correct du second crochet 5. La vanne de commande 23 n'est donc pas inhibée et le retrait de l'organe de verrouillage 11 peut être commandé par la ligne 24 pour provoquer l'ouverture du dispositif de verrouillage.

Si le premier crochet 2 ou son axe de basculement 3 se rompt par suite de la charge ou des vibrations auxquelles il est soumis, le volet 9 tend à s'ouvrir et entraîne l'organe d'accrochage 8. Dans ce mouvement, le second crochet 5 pivote dans le sens inverse des aiguilles d'une montre jusqu'à ce que sa partie de verrouillage 29 vienne en contact avec le galet 30 de l'organe de verrouillage 11 qui se trouve alors bloqué mécaniquement par la forme concave de la partie de verrouillage 29. En outre, le déplacement de l'organe d'accrochage 8 entraîne un pivotement du levier 33 et le détecteur 35 envoie alors un signal inhibant la vanne de commande 23 du vérin d'ouverture 20.

Si le second crochet 5, ou son axe de basculement 6 se rompt alors que le premier crochet 2 est en position de fermeture, le second crochet 5 n'est plus en appui sur l'organe d'accrochage 8 et la partie restante du crochet 5 tend à basculer dans le sens des aiguilles d'une montre sous l'effet du ressort 26. La partie concave 39 du bord du crochet 5 vient alors en regard du détecteur de position 37 qui envoie un signal de défaillance du second crochet 5 inhibant la vanne de commande 23.

Dans le second mode de réalisation illustré de façon schématique partielle sur la figure 3, les éléments ayant une fonction analogue à ceux de la figure 1 ont été référencés avec les mêmes références numériques.

Dans ce mode de réalisation, le premier crochet 2 est toujours monté en porte à faux, c'est-à-dire que son axe de basculement 3 est décalé par rapport à la direction de réaction du crochet (représentée par une flèche), lorsqu'il supporte l'organe d'accrochage 8. Le crochet 2 comporte comme précédemment une partie de verrouillage 12 prenant appui sur le galet de verrouillage 18 de l'organe de verrouillage 11.

Le second crochet 5 est cette fois un crochet auto-verrouillable, c'est-à-dire que l'axe de basculement 6 est disposé selon une direction de réaction du crochet lorsque celui-ci supporte l'organe d'accrochage. Le second crochet comporte en outre une surface support concave 40 pour recevoir l'organe d'accrochage 8. Par ailleurs, le second crochet 5 est relié à l'organe de verrouillage 11 par une bielle télescopique 41 ayant une extrémité fixée au second crochet 5 et une extrémité fixée à l'organe de verrouillage 11, et sollicitée dans un sens de l'extension par un ressort 42. Le décalage entre le premier crochet 2 et le second crochet 5 est limité par une butée 43 portée par le premier crochet 2 et s'étendant dans une fente curviligne 44 réalisée dans le second crochet 5. La position relative de la butée 43 et de la fente 44 est déterminée pour qu'en position de fermeture illustrée sur la figure 3 et lorsque la butée 43 est au fond de la fente 44, la surface support concave 40 du second crochet 5 soit légèrement en retrait par rapport à l'organe d'accrochage 8.

Le fonctionnement de ce second mode de réalisation est le suivant : en position normale d'utilisation illustrée sur la figure 3, l'organe d'accrochage 8 est supporté par le premier crochet 2. Si celui-ci ou son axe de basculement se rompt, l'organe d'accrochage 8 vient prendre appui sur le second crochet 5 qui le supporte et assure simultanément une condamnation mécanique de l'organe de verrouillage 11. Si le second crochet 5 se rompt, le ressort 42 tend à faire pivoter la partie restante du crochet 5 qui n'est plus retenue par le doigt de positionnement 43 et le détecteur 37 envoie un signal d'inhibition de la vanne de commande 23.

Si les deux crochets sont en bon état de fonctionnement, la manoeuvre du vérin de commande 20 entraîne le retrait de l'organe de verrouillage 11, lequel provoque à son tour la rétraction du second crochet 5. Après retrait total de l'organe de verrouillage 11 et du crochet 5 qui lui est associé, le premier crochet 2 bascule de façon habituelle vers la position d'ouverture sous l'effet de l'organe d'accrochage 8 et du ressort de rappel 25.

Lors de la fermeture le crochet 2 est amené en position de fermeture avant l'engagement de l'organe de verrouillage 11 et le crochet 5 est donc maintenu écarté tant que le crochet 2 n'est pas fermé.

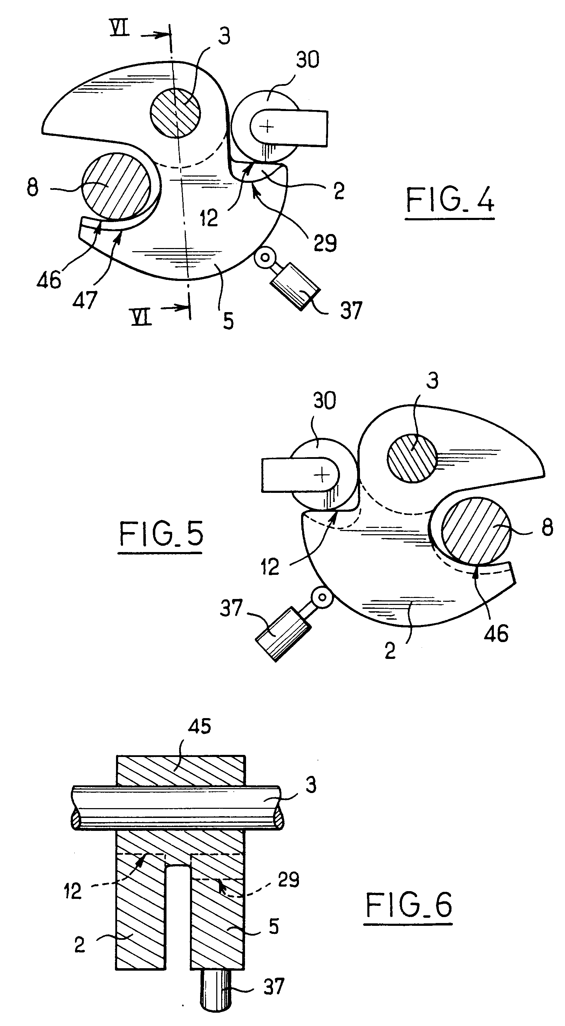

Les figures 4 à 6 illustrent une variante de réalisation du dispositif de la figure 1. Pour simplifier les explications, seuls les crochets de verrouillage ont été représentés ainsi que le détecteur de rupture du second crochet.

Dans cette variante de réalisation, le premier crochet 2 et le second crochet 5 sont portés par un bloc support commun 45 avec lequel ils sont de préférence réalisés en une seule pièce, par exemple en usinant un bloc de métal. Le bloc support commun 45 est monté pour basculer autour d'un axe de basculement 3. Comme précédemment le premier crochet 2 comporte une partie de verrouillage 12 prenant appui sur le galet de verrouillage 30 lorsque le crochet est en charge, c'est-à-dire lorsqu'un organe d'accrochage 8 est en appui sur un bord d'accrochage 46 du crochet 2. Dans cette position qui est représentée sur les figures, l'organe d'accrochage 8 est immobilisé et retient donc l'objet auquel il est associé.

Afin que le second crochet 5 ne soit pas en charge simultanément au premier crochet, le second crochet comporte un bord d'accrochage 47 qui est en retrait du bord d'accrochage 46 du premier crochet. Le second crochet comporte en outre une partie d'appui (de verrouillage) 29 sur le galet de verrouillage 30 qui est également en retrait par rapport à la partie d'appui 12 du premier crochet. Par ailleurs le détecteur de rupture 37 du second crochet prend appui sur celui-ci en un point quelconque du bord du second crochet. En effet, si le second crochet se brise alors qu'il n'est pas en charge, la rupture aura lieu dans la partie la plus étroite, c'est-à-dire au niveau du raccordement avec le bloc support commun 45. Le crochet brisé tombera et le détecteur 37 signalera cette situation quelle que soit sa position le long du bord du crochet.

Si le premier crochet se brise, l'organe d'accrochage 8 prendra appui sur le bord 47 du second crochet et fera pivoter celui-ci jusqu'à ce que la partie d'appui 29 vienne au contact du galet 30. Le dispositif sera alors bloqué en position verrouillée comme dans le cas de la figure 1.

On remarquera que le décalage entre les bords 46 et 47 d'une part et les parties 12 et 29 d'autre part, pourrait être très faible pour maintenir le second crochet hors charge tant que le premier crochet est en service. Toutefois on prévoira de préférence un décalage suffisant pour que le détecteur de position de porte 35 soit sollicité sur une course assez longue pour détecter un changement de situation sans utiliser un détecteur très sensible.

Bien entendu l'invention n'est pas limitée au mode de réalisation décrit et on peut y apporter des variantes de réalisation sans sortir du cadre de l'invention. En particulier, bien que le dispositif selon l'invention ait été représenté avec un organe de verrouillage monté pour coulisser, on peut réaliser l'invention en prévoyant un organe de verrouillage pivotant.

Par ailleurs, si on ne souhaite pas effectuer une condamnation de l'ouverture du dispositif de verrouillage lorsque l'un des crochets est rompu, on peut prévoir un profil du second crochet n'assurant pas un blocage mécanique de l'organe de verrouillage 11 et supprimer les détecteurs de position 35 et 37 ou relier simplement ceux-ci à un voyant signalant l'anomalie constatée sans pour autant inhiber la vanne de commande 23.

Dans le cas d'un organe de liaison comprenant un bloc support commun, on peut également rapporter les deux crochets sur le bloc support commun 45 au lieu de les réaliser en une seule pièce avec celui-ci.

## Revendications

1. Dispositif de verrouillage comportant un boîtier (1), un premier crochet (2) monté sur un axe de basculement (3) porté par le boîtier pour basculer entre une position d'ouverture et une position de fermeture dans laquelle le premier crochet (2) supporte un organe d'accrochage (8), ledit premier crochet (2) étant monté en porte-à-faux par rapport à son axe de basculement (3), c'est-à-dire qu'en position de fermeture l'organe d'accrochage (8) prend appui sur le premier crochet en tendant à le faire basculer vers sa position d'ouverture, un organe de verrouillage escamotable (11) disposé pour s'opposer à un mouvement de basculement du premier crochet par un appui d'une partie de verrouillage (12) du premier crochet sur l'organe de verrouillage, ainsi qu'un second crochet (5) associé au premier crochet (2) par un organe de liaison (26, 43) entre le premier crochet (2) et le second crochet (5), caractérisé en ce que le second crochet (5) est adjacent au premier crochet (2), et en ce que l'organe de liaison (26, 43) est agencé de telle façon qu'en position de fermeture du premier crochet (2), le second crochet (5) soit maintenu dans une position proche d'une position dans laquelle le second crochet (5) supporte l'organe d'accrochage (8), ledit second crochet étant cependant hors charge tant que le premier crochet (2) est en service, et en cas de défaillance du premier crochet (2), le second crochet (5) est immédiatement mis en service et prend le relais du premier crochet (2) pour supporter l'organe d'accrochage (8).

2. Dispositif de verrouillage selon la revendication 1, caractérisé en ce que l'organe de liaison (26) est un organe élastique (26) disposé entre le premier crochet (2) et le second crochet (5) pour solliciter le second crochet vers un contact avec l'organe d'accrochage (8) lorsque le premier crochet (2) supporte l'organe d'accrochage (8), et en ce que le second crochet (5) comporte une partie de verrouillage (29) qui est en retrait de la partie de verrouillage (12) du premier crochet (2) par rapport à l'organe de verrouillage (11) lorsque le premier crochet (2) supporte l'organe d'accrochage (8).

3. Dispositif de verrouillage selon la revendication 2 caractérisé en ce que la partie de verrouillage (29) du second crochet a une forme assurant un blocage mécanique de l'organe de verrouillage lorsqu'elle est en contact avec celui-ci.

4. Dispositif de verrouillage selon la revendication 2, caractérisé en ce que le second crochet (5) est monté sur un axe de basculement (6) indépendant du premier crochet.

5. Dispositif de verrouillage selon la revendication 1, caractérisé en ce que le second crochet (5) est monté sur un axe de basculement (6) disposé selon une direction de réaction du second crochet lorsque celui-ci supporte l'organe d'accrochage (8), en ce que le second crochet (5) est rappelé élastiquement vers une position de contact avec l'organe d'accrochage (8) lorsque le premier crochet (2) est en position de fermeture, et en ce que l'organe de liaison entre le premier (2) et le second crochet (5) comprend une butée (43) portée par le premier crochet (2) pour maintenir le second crochet (5) légèrement à l'écart de l'organe d'accrochage (8) lorsque le premier crochet supporte l'organe d'accrochage (8).

6. Dispositif de verrouillage selon la revendication 5, caractérisé en ce que le second crochet (5) comporte une surface support concave (40) pour recevoir l'organe d'accrochage (8).

7. Dispositif de verrouillage selon la revendication 1, caractérisé en ce qu'il comporte un détecteur de position (35) de l'organe d'accrochage (8) relié à un organe de commande (23) de l'organe de verrouillage (11).

8. Dispositif de verrouillage selon la revendication 1, caractérisé en ce qu'il comporte un détecteur de position (37) du second crochet (5) relié à un organe de commande (23) de l'organe de verrouillage (11).

9. Dispositif de verrouillage selon la revendication 1,caractérisé en ce que l'organe de liaison est un bloc support commun (45) dont le premier crochet (2) et le second crochet (5) sont solidaires, le second crochet (5) comportant un bord d'accrochage (47) en retrait par rapport à un bord d'accrochage (46) du premier crochet et une partie d'appui (29) en retrait par rapport à l'appui de la partie de verrouillage (12) du premier crochet sur l'organe de verrouillage (30).

10. Dispositif de verrouillage selon la revendication 9, caractérisé en ce que le premier crochet (2) et le second crochet (5) sont réalisés en une seule pièce avec le bloc support commun (45).

## Claims

1. A locking device comprising a housing (1), a first hook (2) mounted on a rocking pin (3) carried by the housing to enable the hook to rock between an open position and a closed position in which the first hook (2) supports a catch member (8), said first hook (2) being cantilevered out on its rocking pin (3), i.e. in the closed position the catch member (8) bears against this first hook while tending to make it rock towards its open position, a retractable locking member (11) disposed to oppose rocking movement of the first hook by a locking portion (12) of the first hook bearing against the locking member, together with a second hook (5) associated to the first hook by a link member (26, 43) between the first hook (2) and the second hook (5), characterized in that the second hook (5) is adjacent to the first hook (2), and in that the link member (26, 43) is designed such that in the closed position of the first hook (2), the second hook (5) is maintained in a position close to a position in which the second hook supports the catch member (8), said second hook being nevertheless not subjected to the effects of the load so long as the first hook (2) is operative, and in the event that the first hook (2) should fail, the second hook (5) comes immediately into operation and takes over from the first hook (2) for supporting the catch member (8).

2. A locking device according to claim 1, characterized in that the link member (26) is a resilient member (26) disposed between the first hook (2) and the second hook (5) to urge the second hook into making contact with the catch member (8) so long as the first hook (2) is supporting the catch member (8), and in that the second hook (5) includes a locking portion (29) which is set back from the locking portion (12) of the first hook (2) relative to the locking member (11) so long as the first hook (2) is supporting the catch member (8).

3. A locking device according to claim 2, characterized in that the locking portion (29) of the second hook is of a shape that ensures that the locking member is mechanically held in position when it is in contact therewith.

4. A locking device according to claim 2, characterized in that the second hook (5) is mounted on a rocking pin (6) which is independent from that of the first hook.

5. A locking device according to claim 1, characterized in that the second hook (5) is mounted on a rocking pin (6) that lies on a reaction direction of the second hook when the second hook is supporting the catch member (8), in that the second hook (5) is resiliently urged towards a position where it comes into contact with the catch member (8) while the first hook (2) is in its closed position, and in that the link member between the first (2) and second (5) hooks includes an abutment (43) carried by the first hook (2) to keep the second hook (5) slightly away from the catch member (8) while the first hook is supporting the catch member (8).

6. A locking device according to claim 5, characterized in that the second hook (5) includes a concave support surface (40) for receiving the catch member (8).

7. A locking device according to claim 1, characterized in that it includes a position detector (35) for detecting the position of the catch member (8) and connected to a control member (23) for the locking member (11).

8. A locking device according to claim 1, characterized in that it includes a position detector (37) for the second hook (5) and connected to a control member (23) for the locking member (11).

9. A locking device according to claim 1, characterized in that the link member is a common support block (45) having the first hook (2) and the second hook (5) secured thereto, the second hook (5) including a hook edge (47) which is set back relative to a hook edge (46) of the first hook, and a locking portion (29) that is set back relative to the bearing zone of the locking portion (12) of the first hook away from the locking member (30).

10. A locking device according to claim 9, characterized in that the first hook (2) and the second hook (5) are integrally formed with the common support block (45).

## Patentansprüche

1. Verriegelungsvorrichtung umfassend ein Gehäuse (1), einen ersten Haken (2), der auf einer von dem Gehäuse getragenen Schwenkachse (3) zum Schwenken zwischen einer Öffnungsstellung und einer Schließstellung gelagert ist, in welcher der erste Haken (2) ein Einhängelement (8) hält, wobei der erste Haken (2) bezüglich seiner Schwenkachse (3) freitragend gelagert ist, d.h., daß in der Schließstellung das Einhängelement (8) an dem ersten Haken anliegt mit der Tendenz, ihn in seine Öffnungsstellung zu verschwenken, ein ausrückbares Verriegelungselement (11), das angeordnet ist, um die Schwenkbewegung des ersten Hakens durch Anlage eines Verriegelungsabschnittes (12) des ersten Hakens an dem Verriegelungselement zu verhindern, und einen zweiten Haken (5), der mit dem ersten Haken (2) durch ein Verbindungsorgan (26, 43) zwischen dem ersten Haken (2) und dem zweiten Haken (5) verbunden ist, dadurch **gekennzeichnet**, daß der zweite Haken (5) neben dem ersten Haken (2) angeordnet ist und daß das Verbindungsorgan (26, 43) derart ausgebildet ist, daß in der Schließstellung des ersten Hakens (2) der zweite Haken (5) in einer Stellung nahe einer Position gehalten wird, in welcher der zweite Haken (5) das Einhängelement (8) hält, wobei der zweite Haken jedoch nicht belastet ist, solange der erste Haken (2) in Funktion ist, und wobei im Falle eines Versagens des ersten Hakens (2) der zweite Haken (5) sofort in Funktion tritt und die Aufgabe des ersten Hakens (2) übernimmt, um das Einhängelement (8) zu halten.

2. Verriegelungsvorrichtung nach Anspruch 1, dadurch **gekennzeichnet**, daß das Verbindungsorgan (26) ein elastisches Organ (26) ist, das zwischen dem ersten Haken (2) und dem zweiten Haken (5) angeordnet ist, um den zweiten Haken in Richtung auf eine Berührung mit dem Einhängelement (8) vorzuspannen, wenn der erste Haken (2) das Einhängelement (8) hält, und daß der zweite Haken (5) einen Verriegelungsabschnitt (29) hat, der gegenüber dem Verriegelungsabschnitt (12) des ersten Hakens (2) bezüglich des Verriegelungselementes (11) zurückgesetzt ist, wenn der erste Haken (2) das Einhängelement (8) hält.

3. Verriegelungsvorrichtung nach Anspruch 2, dadurch **gekennzeichnet**, daß der Verriegelungsabschnitt (29) des zweiten Hakens eine Form hat, die eine mechanische Blockierung des Verriegelungselementes gewährleistet, wenn er mit diesem in Kontakt ist.

4. Verriegelungsvorrichtung nach Anspruch 2, dadurch **gekennzeichnet**, daß der zweite Haken (5) auf einer von dem ersten Haken unabhängigen Schwenkachse (6) gelagert ist.

5. Verriegelungsvorrichtung nach Anspruch 1, dadurch **gekennzeichnet**, daß der zweite Haken (5) auf einer Schwenkachse (6) gelagert ist, die entsprechend einer Reaktionsrichtung des zweiten Hakens ausgerichtet ist, wenn dieser das Einhängorgan (8) hält, daß der zweite Haken (5) elastisch in eine Stellung der Berührung mit dem Einhängorgan (8) rückgestellt wird, wenn der erste Haken (2) in Schließstellung ist, und daß das Verbindungsorgan zwischen dem ersten Haken (2) und dem zweiten Haken (5) einen Anschlag (43) an dem ersten Haken (2) hat, um den zweiten Haken (5) in einem geringen Abstand von dem Einhängelement (8) zu halten, wenn der erste Haken das Einhängelement (8) hält.

6. Verriegelungsvorrichtung nach Anspruch 5, dadurch **gekennzeichnet**, daß der zweite Haken (5) eine konkave Haltefläche (40) zur Aufnahme des Einhängelementes (8) hat.

7. Verriegelungsvorrichtung nach Anspruch 1, dadurch **gekennzeichnet**, daß sie einen mit einem Steuerorgan (23) des Verriegelungselementes (11) verbundenen Stellungsdetektor (35) zum Erfassen der Stellung des Einhängelementes (8) hat.

8. Verriegelungsvorrichtung nach Anspruch 1, dadurch **gekennzeichnet**, daß sie einen mit einem Steuerorgan (23) des Verriegelungselementes (11) verbundenen Stellungsdetektor (37) zum Erfassen der Stellung des zweiten Hakens (5) hat.

9. Verriegelungsvorrichtung nach Anspruch 1, dadurch **gekennzeichnet**, daß das Verbindungselement ein gemeinsamer Trägerblock (45) ist, mit dem der erste Haken (2) und der zweite Haken (5) verbunden sind, wobei der zweite Haken (5) einen Verriegelungsrand (47) hat, der gegenüber einem Verriegelungsrand (46) des ersten Hakens zurückversetzt ist, und wobei der zweite Haken (5) einen Anlageabschnitt (29) hat, der bezüglich der Anlage des Verriegelungsabschnittes (12) des ersten Hakens an dem Verriegelungselement (30) zurückversetzt ist.

10. Verriegelungsvorrichtung nach Anspruch 9, dadurch **gekennzeichnet**, daß der erste Haken (2) und der zweite Haken (5) einstückig mit dem gemeinsamen Trägerblock (45) ausgebildet sind.
